# EUROPEAN PATENT SPECIFICATION

(11) **EP 3 904 829 B1**
(45) Date of publication and mention of the grant of the patent: **21.12.2022**
(21) Application number: 21165040.3
(22) Date of filing: 25.03.2021
(51) Int. Cl.: G01S 17/931, G01S 17/89, G01C 21/30, G01S 7/48, G01C 21/36

(54) **METHOD AND APPARATUS FOR GENERATING INFORMATION, DEVICE, MEDIUM AND COMPUTER PROGRAM PRODUCT**
VERFAHREN UND EINRICHTUNG ZUR ERZEUGUNG VON INFORMATIONEN, VORRICHTUNG, MEDIUM UND COMPUTERPROGRAMMPRODUKT
PROCÉDÉ ET APPAREIL POUR GÉNÉRER DES INFORMATIONS, DISPOSITIF, SUPPORT ET PRODUIT PROGRAMME INFORMATIQUE

(30) Priority: 30.04.2020 CN 202010362272
(43) Date of publication of application: 03.11.2021
(73) Proprietor: BEIJING BAIDU NETCOM SCIENCE AND TECHNOLOGY CO., LTD., 100085 Beijing (CN)
(72) Inventor: LI, Shiwei, Haidian District, Beijing 100085 (CN)
(74) Representative: Mewburn Ellis LLP

(56) References cited:
- US-A1- 2019 197 778
- US-A1- 2020 109 954

## Description

### TECHNICAL FIELD

Embodiments of the present disclosure relate to the field of computer technology, and specifically to the generation of test data in the field of autonomous driving.

### BACKGROUND

At current stage, a positioning system in autonomous driving can perform high-precision positioning by a multi-sensor fusion method. By using complementary advantages and redundant backup of various sensors, an autonomous vehicle can obtain high-precision and robust positioning results. A high-precision positioning map that is strongly dependent on a lidar and is drawn in advance using data of the lidar for positioning ensures the positioning precision of the vehicle in the case of poor GNSS (Global Navigation Satellite System) signals. This positioning method mainly relies on the high-precision data of the lidar to draw a reflection value map of the physical world in advance. The vehicle loads the map in an autonomous driving mode and matches the map with lidar data acquired in real time to obtain high-precision position information. Because the high-precision positioning map is high in acquisition and drawing costs and long in mapping cycle, and the map cannot be updated in real time at present, the positioning map has certain lag, which brings certain risks to the positioning method using map matching. When the environment changes, the point cloud data acquired by the vehicle in real time cannot perfectly match the previous map data acquired when the environment does not change, which may lead to positioning errors. How to effectively test the performance of the positioning system in this case is extremely important in the process of unmanned vehicle testing. The test can verify the degree of the environmental change that the positioning system supports and the degree of the environmental change that has risks. However, it is very difficult to construct real scenarios of environmental changes on roads. It may not only affect traffic, but also violate traffic laws. Therefore, a specific environment change scenario can be verified only after this type of scenario is encountered, which leads to very low test efficiency and test coverage and cannot achieve control and prediction.

US20190197778 A1 provides an object identification and labeling tool for training autonomous vehicle controllers, and focuses on identifying/delineating objects in point cloud and labeling and tracking the identified/delineated objects.

US20200109954 A1 provides a method for generating a 3D map by splicing data received from a plurality of vehicles.

### SUMMARY

Aspects of the invention are set out in the appended claims.

Embodiments of the invention relate to a method and apparatus for generating information, a device, a storage medium and a computer program product are provided.

According to the technology of embodiments of the present disclosure, a point cloud acquired from a real physical scenario is processed to simulate an environmental change of a real physical environment, and the processed point cloud is sent to a test vehicle, where the processed point cloud is used for generation of positioning information, thereby realizing stability test of a positioning system of the test vehicle.

It should be appreciated that the description of the Summary is not intended to limit the key or important features of embodiments of the present disclosure, or to limit the scope of the present disclosure. Other features of the present disclosure will become readily comprehensible through the following description.

### BRIEF DESCRIPTION OF THE DRAWINGS

The accompanying drawings are used to better understand the solution and do not constitute limitations to the present disclosure.
Fig. 1 is a flowchart of a method for generating information according to an embodiment of the present disclosure;
Fig. 2 is a schematic diagram of an application scenario of the method for generating information according to an embodiment of the present disclosure;
Fig. 3 is a flowchart of a method for generating information according to another embodiment of the present disclosure;
Fig. 4 is a flowchart of a method for generating information according to another embodiment of the present disclosure;
Fig. 5 is a schematic structural diagram of an apparatus for generating information according to an embodiment of the present disclosure; and
Fig. 6 is a block diagram of an electronic device used to implement the method for generating information according to embodiments of the present disclosure.

### DETAILED DESCRIPTION OF EMBODIMENTS

Example embodiments of the present disclosure are described below in combination with the accompanying drawings, and various details of embodiments of the present disclosure are included in the description to facilitate understanding, and should be considered as illustrative only.

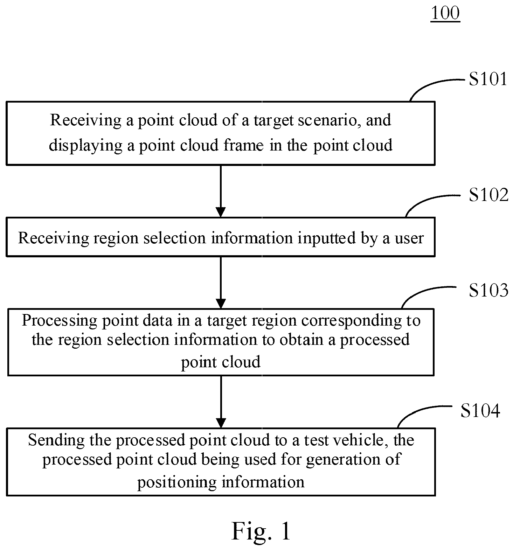

Fig. 1 shows a flow 100 of a method for generating information according to an embodiment of the present disclosure. The method for generating information includes the following steps.

S101: receiving a point cloud of a target scenario, and displaying a point cloud frame in the point cloud.

In this embodiment, the executing body of the method for generating information receives, via a wired or wireless connection, the point cloud acquired for the target scenario from a data acquisition device (for example, a lidar, a three-dimensional laser scanner, or the like) for acquiring the point cloud. Here, the target scenario refers to a scenario in the real physical world (for example, a real road scenario), and the target scenario may include a plurality of static objects, such as trees, light poles, signboards, construction fences, and buildings. In actual test of an autonomous vehicle, the target scenario may be a scenario to be changed, and the response of the autonomous vehicle to environmental changes is tested by changing the target scenario. After that, the executing body may display the point cloud frame in the received point cloud for a user to view. The user here may refer to a technician who creates the test data of the autonomous vehicle.

Generally, the point cloud may include at least one point cloud frame. Each point cloud frame may include a plurality of pieces of point data. Here, the point data may include three-dimensional coordinates and laser reflection intensity. Generally, the three-dimensional coordinates of the point data may include information on the X axis, Y axis, and Z axis. Here, the laser reflection intensity may refer to a ratio of laser reflection energy to laser emission energy.

Here, the executing body may be various electronic devices with a display screen and data processing functions, including but not limited to: a smart phone, a tablet computer, a laptop portable computer, a desktop computer and a vehicle terminal.

S102: receiving region selection information inputted by a user.

In this embodiment, the executing body receives the region selection information inputted by the user. Here, the region selection information may be sent by the user based on the point cloud frame displayed in S101. For example, the user may designate a region from the point cloud frame displayed by the executing body as a target region according to actual needs, and the target region may include a plurality of pieces of point data.

S103: processing point data in a target region corresponding to the region selection information to obtain a processed point cloud.

In this embodiment, the executing body performs various processing on the point data in the target region corresponding to the region selection information by deletion, modification, and substitution. Thus, each processed point cloud frame is obtained, and the processed point cloud frame can constitute the processed point cloud. By processing the point data in the target region, the environmental change of the real physical environment can be simulated.

S104: sending the processed point cloud to a test vehicle, the processed point cloud being used for generation of positioning information.

In this embodiment, the executing body sends the processed point cloud obtained in S103 to the test vehicle, where the processed point cloud may be used for the generation of positioning information. For example, the test vehicle may be an autonomous vehicle, and the autonomous vehicle may generate the positioning information according to the received processed point cloud and a preloaded reflection value map. In this way, the user can determine, according to the positioning information generated by the test vehicle, the stability of a positioning system of the test vehicle when the environment changes.

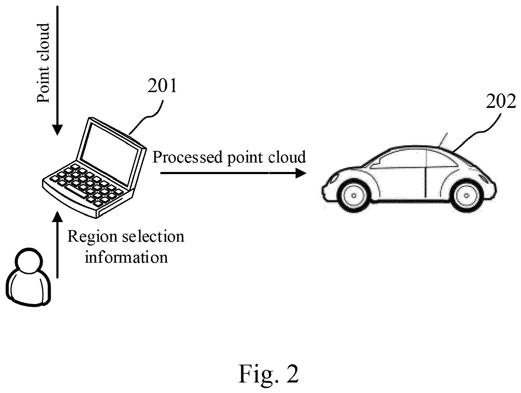

Continuing to refer to Fig. 2, Fig. 2 is a schematic diagram of an application scenario of the method for generating information according to this embodiment. In the application scenario of Fig. 2, a terminal device 201 first receives a point cloud of a target scenario, and displays a point cloud frame in the point cloud. Second, the terminal device 201 may receive region selection information inputted by a user, where the region selection information is sent by the user based on the point cloud frame displayed by the terminal device 201. Then, the terminal device 201 processes point data in a target region corresponding to the region selection information to obtain a processed point cloud. Finally, the terminal device 201 sends the processed point cloud to a test vehicle 202, where the processed point cloud may be used for the generation of positioning information.

According to the method provided by the above embodiment of the present disclosure, a point cloud acquired from a real physical scenario is processed to simulate an environmental change of a real physical environment, and the processed point cloud is sent to a test vehicle, where the processed point cloud may be used for the generation of positioning information, thereby realizing stability test of a positioning system of the test vehicle.

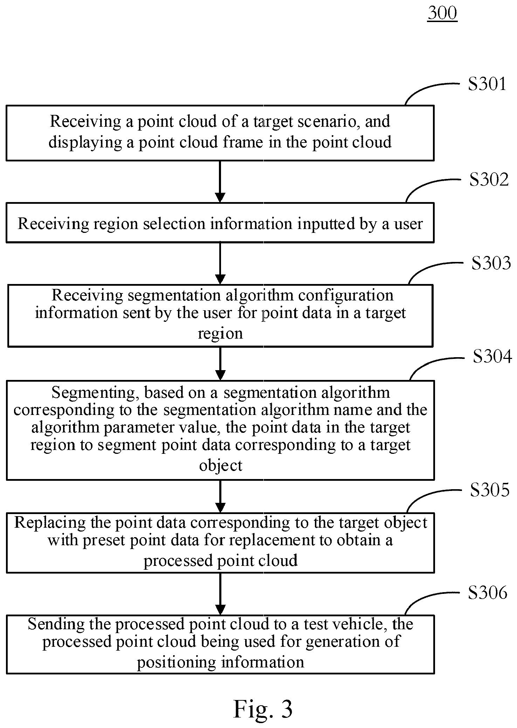

Further referring to Fig. 3, a flow 300 of another embodiment of the method for generating information is shown. The flow 300 of the method for generating information includes the following steps.

S301: receiving a point cloud of a target scenario, and displaying a point cloud frame in the point cloud.

In this embodiment, S301 is similar to S101 in the embodiment shown in Fig. 1, so details are not described herein again.

S302: receiving region selection information inputted by a user.

In this embodiment, S302 is similar to S102 in the embodiment shown in Fig. 1, so details are not described herein again.

S303: receiving segmentation algorithm configuration information sent by the user for point data in a target region.

In this embodiment, the executing body may receive the segmentation algorithm configuration information sent by the user for the point data in the target region. Here, the segmentation algorithm configuration information may include a segmentation algorithm name and an algorithm parameter value.

In practice, the point cloud may be segmented by means of a variety of algorithms, such as an edge-based segmentation algorithm, a region-based segmentation algorithm, and a model-based segmentation algorithm, and each segmentation algorithm has corresponding algorithm parameters. In this way, the user may set a segmentation algorithm to be used for the point data in the target region, set corresponding algorithm parameter value, and send the set segmentation algorithm name and algorithm parameter value as the segmentation algorithm configuration information to the executing body.

S304: segmenting, based on a segmentation algorithm corresponding to the segmentation algorithm name and the algorithm parameter value, the point data in the target region to segment point data corresponding to a target object.

In this embodiment, the executing body may segment the point data in the target region by using the segmentation algorithm corresponding to the segmentation algorithm name and the algorithm parameter value in the segmentation algorithm configuration information, to segment the point data corresponding to the target object. The segmentation algorithm may segment the point data in the target region to segment the point data corresponding to the target object in the target region.

S305: replacing the point data corresponding to the target object with preset point data for replacement to obtain a processed point cloud.

In this embodiment, the executing body may replace the point data corresponding to the target object with the preset point data for replacement. As an example, the executing body may first delete the point data corresponding to the target object segmented in S304. After that, the executing body may fill the position of the deleted point data with the preset point data for replacement. In this way, video frames in the point cloud can be processed sequentially to obtain the processed point cloud. Here, the preset point data for replacement may be point data acquired by various methods, for example, manually generated. As an example, S304 and S305 may be performed under a radar coordinate system. The parameters of different point cloud frames may be adaptively adjusted according to the location of the test vehicle.

In some optional implementations of this embodiment, the point data for replacement may be determined by: determining the point data for replacement based on the point data within a preset range of a region where the target object is located.

In this implementation, the executing body may determine the point data for replacement based on the point data within the preset range of the region where the target object is located. As an example, the executing body may count a mean value and variance of coordinates of the point data within the preset range of the region where the target object is located, and a mean value and variance of laser reflection intensities of the point data, and generate the point data for replacement according to the statistical results. As another example, the executing body may select the point data within the preset range of the region where the target object is located as the point data for replacement. Through this implementation, the executing body may determine the point data for replacement according to the point data of the surrounding environment where the target object is located, so that the generated processed point cloud is more realistic.

S306: sending the processed point cloud to a test vehicle, the processed point cloud being used for generation of positioning information.

In this embodiment, S306 is similar to S104 in the embodiment shown in Fig. 1, so details are not described herein again.

As can be seen from Fig. 3, compared with the embodiment corresponding to Fig. 1, the flow 300 of the method for generating information in this embodiment highlights the steps of segmenting the point data corresponding to the target object, and replacing the point data corresponding to the target object with the point data for replacement. Therefore, the solution described in this embodiment can remove the point data corresponding to the target object in the point cloud frame, thereby simulating the environmental change that the target object is removed from the real physical environment, and realizing the stability test of this environmental change of target object removal by a positioning system of the autonomous vehicle.

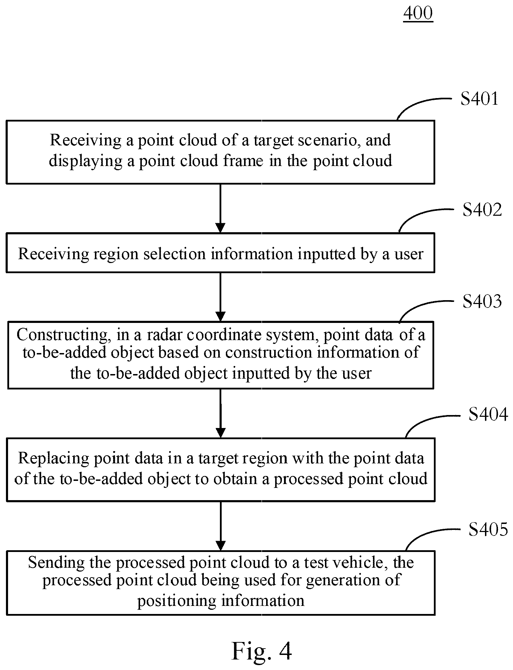

Further referring to Fig. 4, a flow 400 of still another embodiment of a method for generating information is shown. The flow 400 of the method for generating information includes the following steps.

S401: receiving a point cloud of a target scenario, and displaying a point cloud frame in the point cloud.

In this embodiment, S401 is similar to S101 in the embodiment shown in Fig. 1, so details are not described herein again.

In some optional implementations of this embodiment, displaying the point cloud frame in the point cloud in S401 may be specifically performed as follows.

First, point data in the point cloud frame of the point cloud is transformed to a world coordinate system.

In this implementation, the executing body may transform the point data in the point cloud frame of the point cloud to the world coordinate system. Generally, the point cloud acquired by the lidar is in a radar coordinate system, and an electronic map is in the world coordinate system. Therefore, the point data in the point cloud frame of the point cloud needs to be transformed to the world coordinate system.

Second, in combination with an electronic map corresponding to the target scenario, the point data in the point cloud frame is displayed in the electronic map.

In this implementation, the executing body may display, in combination with the electronic map corresponding to the target scenario, the point data in the point cloud frame in the electronic map. Through this implementation, the point cloud frame of the point cloud is displayed in combination with the electronic map, so that the display effect is more intuitive, and it is convenient for a user to send region selection information based on the displayed point cloud frame.

S402: receiving region selection information inputted by a user.

In this embodiment, S402 is similar to S102 in the embodiment shown in Fig. 1, so details are not described herein again.

S403: constructing, in a radar coordinate system, point data of a to-be-added object based on construction information of the to-be-added object inputted by the user.

In this embodiment, the executing body may determine whether the point data of the point cloud is in the radar coordinate system, and may transform the point data of the point cloud to the radar coordinate system if the point data of the point cloud is not in the radar coordinate system. The executing body may further receive the construction information of the to-be-added object inputted by the user. Here, the construction information of the to-be-added object may be used to construct the point data of the to-be-added object. As an example, the construction information of the to-be-added object may include the shape of the object (for example, a cuboid, a cylinder, or the like), a laser reflection intensity of the object, point data distribution of the object, and the like. After that, the executing body may construct the point data of the to-be-added object according to the construction information of the to-be-added object. Taking the shape of the object as the cuboid as an example, the user may preset the parameters of the cuboid, such as length, width, height, center position, and orientation. The executing body may calculate, according to the above parameters, a surface equation of the cuboid in a vehicle coordinate system and a scannable part of the lidar. Then, the executing body may set a laser reflection intensity and a point cloud density according to the set distance of the cuboid from the vehicle, and generate a series of point data that complies with the surface equation.

S404: replacing point data in a target region with the point data of the to-be-added object to obtain a processed point cloud.

In this embodiment, the executing body may replace the point data in the target region with the point data of the to-be-added object generated in S403. In this way, videos in the point cloud can be processed sequentially to obtain the processed point cloud.

S405: sending the processed point cloud to a test vehicle, where the processed point cloud being used for generation of positioning information.

In this embodiment, S405 is similar to S104 in the embodiment shown in Fig. 1, so details are not described herein again.

As can be seen from Fig. 4, compared with the embodiment corresponding to Fig. 1, the flow 400 of the method for generating information in this embodiment highlights the steps of constructing the point data of the to-be-added object, and replacing the point data in the target region with the point data of the to-be-added object. Therefore, the solution described in this embodiment can fill the target region of the point cloud frame with the point data corresponding to the to-be-added object, thereby simulating the environmental change of adding the to-be-added object in the target region, and realizing the stability test of this environmental change of adding the to-be-added object in the target region by a positioning system of the autonomous vehicle.

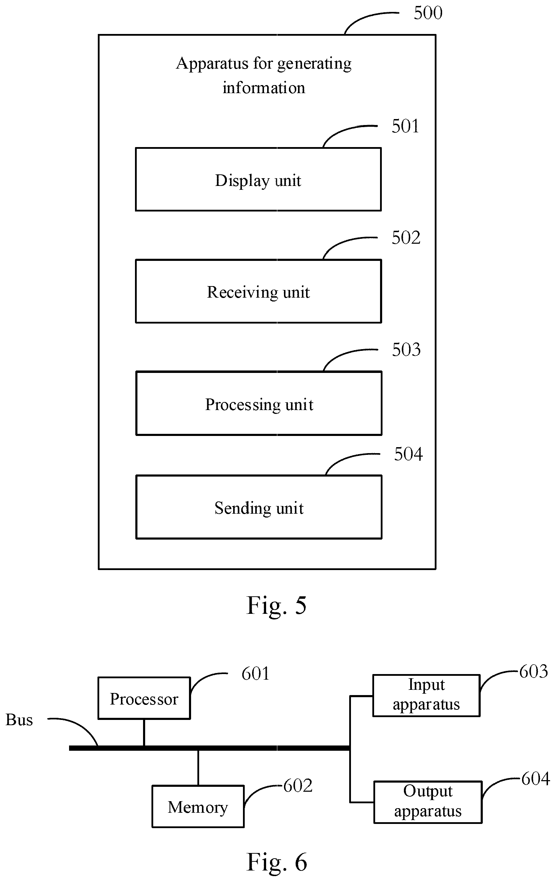

Further referring to Fig. 5, as an implementation of the method shown in the above drawings, an embodiment of the present disclosure provides an apparatus for generating information. The embodiment of the apparatus may correspond to the embodiment of the method shown in Fig. 1, and the apparatus may be applied to various electronic devices.

As shown in Fig. 5, the apparatus 500 for generating information in this embodiment includes: a display unit 501, a receiving unit 502, a processing unit 503, and a sending unit 504. The display unit 501 is configured to receive a point cloud of a target scenario, and display a point cloud frame in the point cloud; the receiving unit 502 is configured to receive region selection information inputted by a user, the region selection information being sent by the user based on the displayed point cloud frame; the processing unit 503 is configured to process point data in a target region corresponding to the region selection information to obtain a processed point cloud; and the sending unit 504 is configured to send the processed point cloud to a test vehicle, the processed point cloud being used for generation of positioning information.

In this embodiment, the specific processing of the display unit 501, the receiving unit 502, the processing unit 503, and the sending unit 504 of the apparatus 500 for generating information and the technical effects thereof may be referred to the related descriptions of S101, S102, S103 and S104 in the embodiment corresponding to Fig. 1 respectively, so details are not described herein again.

In some optional implementations of this embodiment, the processing unit 503 is further configured to: receive segmentation algorithm configuration information sent by the user for the point data in the target region, the segmentation algorithm configuration information including a segmentation algorithm name and an algorithm parameter value; segment, based on a segmentation algorithm corresponding to the segmentation algorithm name and the algorithm parameter value, the point data in the target region to segment point data corresponding to a target object; and replace the point data corresponding to the target object with preset point data for replacement to obtain the processed point cloud.

In some optional implementations of this embodiment, the point data for replacement may be determined by: determining the point data for replacement based on the point data within a preset range of a region where the target object is located.

In some optional implementations of this embodiment, the display unit 501 is further configured to: transform point data in the point cloud frame of the point cloud to a world coordinate system; and display, in combination with an electronic map corresponding to the target scenario, the point data in the point cloud frame in the electronic map.

In some optional implementations of this embodiment, the processing unit 503 is further configured to: construct, in a radar coordinate system, point data of a to-be-added object based on construction information of the to-be-added object inputted by the user; and replace the point data in the target region with the point data of the to-be-added object to obtain the processed point cloud.

According to embodiments of the present disclosure, the present disclosure further provides an electronic device and a readable storage medium.

Fig. 6 shows a block diagram of an electronic device for the method for generating information according to embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may also represent various forms of mobile apparatuses, such as a personal digital processor, a cellular phone, a smart phone, a wearable device, and other similar computing apparatuses. The components shown herein, their connections and relationships, and their functions are merely examples, and are not intended to limit embodiments of the present disclosure described and/or required herein.

As shown in Fig. 6, the electronic device includes: one or more processors 601, a memory 602, and interfaces for connecting various components, including high-speed interfaces and low-speed interfaces. The various components are connected to each other by different buses, and can be installed on a common motherboard or installed in other ways as required. The processor may process instructions executed in the electronic device, including instructions stored in or on the memory to display graphical information of a GUI on an external input/output apparatus (such as a display device coupled to an interface). In other embodiments, a plurality of processors and/or a plurality of buses may be used with a plurality of memories if necessary. Similarly, a plurality of electronic devices may be connected, and each device provides some necessary operations (for example, as a server array, a group of blade servers, or a multi-processor system). One processor 601 is taken as an example in Fig. 6.

The memory 602 is a non-transitory computer readable storage medium provided by embodiments of the present disclosure. The memory stores instructions executable by at least one processor, causing the at least one processor to perform the method for generating information according to embodiments of the present disclosure. The non-transitory computer readable storage medium of embodiments of the present disclosure stores computer instructions, and the computer instructions are used for a computer to perform the method for generating information according to embodiments of the present disclosure.

As a non-transitory computer readable storage medium, the memory 602 may be used to store non-transitory software programs, non-transitory computer-executable programs and modules, such as program instructions/modules (for example, the display unit 501, the receiving unit 502, the processing unit 503, and the sending unit 504 shown in Fig. 5) corresponding to the method for generating information according to embodiments of the present disclosure. The processor 601 executes various functional applications and data processing of the server by running the non-transitory software programs, instructions and modules stored in the memory 602, that is, implements the method for generating information according to the above embodiments of the method.

The memory 602 may include a program storage area and a data storage area, where the program storage area may store an operating system and an application program required by at least one function; and the data storage area may store data created by the use of the electronic device according to the method for generating information. In addition, the memory 602 may include a high-speed random access memory, and may also include a non-transitory memory, such as at least one magnetic disk storage device, a flash memory device, or other non-transitory solid-state storage devices. In some embodiments, the memory 602 may optionally include memories remotely configured with respect to the processor 601, and these remote memories may be connected to the electronic device for the method for generating information through a network. Examples of the network include, but are not limited to, the Internet, an intranet, a local area network, a mobile communications network, or a combination thereof.

The electronic device used in the method for generating information may further include: an input apparatus 603 and an output apparatus 604. The processor 601, the memory 602, the input apparatus 603, and the output apparatus 604 may be connected by a bus or other means, for example a bus in Fig. 6.

The input apparatus 603 may receive input digital or character information, and generate key signal inputs related to the user settings and function control of the electronic device for generating information, such as a touch screen, a keypad, a mouse, a trackpad, a touchpad, an indicating arm, one or more mouse buttons, a trackball, a joystick and other input apparatuses. The output apparatus 604 may include a display device, an auxiliary lighting apparatus (for example, LED) and a tactile feedback apparatus (for example, a vibration motor) . The display device may include, but is not limited to, a liquid crystal display (LCD), a light emitting diode (LED) display, and a plasma display. In some embodiments, the display device may be a touch screen.

Various implementations of the systems and techniques described herein may be implemented in a digital electronic circuit system, an integrated circuit system, an application specific integrated circuit (ASIC), computer hardware, firmware, software, and/or combinations thereof. These various implementations may include the implementation in one or more computer programs. The one or more computer programs may be executed and/or interpreted on a programmable system including at least one programmable processor, and the programmable processor may be a dedicated or general-purpose programmable processor, may receive data and instructions from a storage system, at least one input apparatus and at least one output apparatus, and transmit the data and the instructions to the storage system, the at least one input apparatus and the at least one output apparatus.

These computing programs, also referred to as programs, software, software applications or codes, include a machine instruction of the programmable processor, and may be implemented using a high-level procedural and/or an object-oriented programming language, and/or an assembly/machine language. As used herein, the terms "machine readable medium" and "computer readable medium" refer to any computer program product, device and/or apparatus (e.g., a magnetic disk, an optical disk, a storage device and a programmable logic device (PLD)) used to provide a machine instruction and/or data to the programmable processor, and include a machine readable medium that receives the machine instruction as a machine readable signal. The term "machine readable signal" refers to any signal used to provide the machine instruction and/or data to the programmable processor.

To provide an interaction with a user, the systems and techniques described here may be implemented on a computer having a display apparatus (e.g., a cathode ray tube (CRT)) or an LCD monitor) for displaying information to the user, and a keyboard and a pointing apparatus (e.g., a mouse or a track ball) by which the user may provide the input to the computer. Other kinds of apparatuses may also be used to provide the interaction with the user. For example, a feedback provided to the user may be any form of sensory feedback (e.g., a visual feedback, an auditory feedback, or a tactile feedback); and an input from the user may be received in any form, including acoustic, speech, or tactile input.

The systems and techniques described here may be implemented in a computing system (e.g., as a data server) that includes a backend part, implemented in a computing system (e.g., an application server) that includes a middleware part, implemented in a computing system (e.g., a user computer having a graphical user interface or a Web browser through which the user may interact with an implementation of the systems and techniques described here) that includes a frontend part, or implemented in a computing system that includes any combination of the backend part, the middleware part or the frontend part. The parts of the system may be interconnected by any form or medium of digital data communication (e.g., a communication network) . Examples of the communication network include a local area network (LAN), a wide area network (WAN) and Internet.

The computer system may include a client and a server. The client and the server are generally remote from each other and typically interact through the communication network. The relationship between the client and the server is generated through computer programs running on the respective computers and having a client-server relationship to each other.

According to an embodiment of the present disclosure, the present disclosure further provides a computer program product including a computer program, where the computer program, when executed by a processor, implements the method for processing a video frame.

According to the technical solutions of embodiments of the present disclosure, a point cloud acquired from a real physical scenario is processed to simulate an environmental change of a real physical environment, and the processed point cloud is sent to a test vehicle, where the processed point cloud is used for the generation of positioning information, thereby realizing stability test of a positioning system of the test vehicle.

It should be understood that the various forms of processes shown above may be used to resort, add or delete steps. For example, the steps described in embodiments of the present disclosure may be performed in parallel, sequentially, or in a different order. As long as the desired result of the technical solution disclosed in embodiments of the present disclosure can be achieved, no limitation is made herein.

Embodiments do not constitute a limitation to the scope of protection of the present disclosure. It should be appreciated by those skilled in the art that various modifications, combinations, sub-combinations and substitutions may be made depending on design requirements and other factors.

## Claims

1. A method for generating information, comprising:
receiving (S101, S301, S401) a point cloud of a target scenario, and displaying a point cloud frame in the point cloud, wherein the target scenario refers to a scenario in a real physical world, and the point cloud includes at least one point cloud frame, the point cloud frame including a plurality of pieces of point data, the point data including three-dimensional coordinates and laser reflection intensity;
receiving (S102, S302, S402) region selection information inputted by a user, the region selection information being sent by the user based on the displayed point cloud frame;
processing (S103) point data in a target region corresponding to the region selection information by deletion, modification, or substitution to obtain a processed point cloud, wherein environmental change of the real physical environment is simulated by the processing; and
sending (S104, S306, S405) the processed point cloud to a test vehicle, the processed point cloud being used for generation of positioning information.

2. The method according to claim 1, wherein the processing (S103) the point data in the target region corresponding to the region selection information to obtain the processed point cloud comprises:
receiving (S303) segmentation algorithm configuration information sent by the user for the point data in the target region, the segmentation algorithm configuration information comprising a segmentation algorithm name and an algorithm parameter value;
segmenting (S304), based on a segmentation algorithm corresponding to the segmentation algorithm name and the algorithm parameter value, the point data in the target region to segment point data corresponding to a target object; and
replacing (S305) the point data corresponding to the target object with preset point data for replacement to obtain the processed point cloud.

3. The method according to claim 2, wherein the point data for replacement is determined by:
determining the point data for replacement based on the point data within a preset range of a region where the target object is located.

4. The method according to any one of claims 1-3, wherein the displaying (S101, S301) the point cloud frame in the point cloud comprises:
transforming point data in the point cloud frame of the point cloud to a world coordinate system; and
displaying, in combination with an electronic map corresponding to the target scenario, the point data in the point cloud frame in the electronic map.

5. The method according to any one of claims 1-4, wherein the processing (S103) the point data in the target region corresponding to the region selection information to obtain the processed point cloud comprises:
constructing (S403), in a radar coordinate system, point data of a to-be-added object based on construction information of the object inputted by the user; and
replacing (S404) the point data in the target region with the point data of the to-be-added object to obtain the processed point cloud.

6. An apparatus (500) for generating information, comprising a plurality of modules (501, 502, 503, 504) configured to implement the method according to any one of claims 1-5.

7. An electronic device, comprising:
at least one processor (601); and
a memory (602) communicatively connected with the at least one processor (601);
the memory storing instructions executable by the at least one processor (601), and the instructions, when executed by the at least one processor (601), causing the at least one processor (601) to perform the method according to any one of claims 1-5.

8. A non-transitory computer readable storage medium (602) storing computer instructions, the computer instructions being used to cause a computer to perform the method according to any one of claims 1-5.

9. A computer program product comprising a computer program, the computer program, when executed by a processor (601), implementing the method according to any one of claims 1-5.

## Patentansprüche

1. Verfahren zum Generieren von Informationen, das Folgendes umfasst:
Empfangen (S101, S301, S401) einer Punktwolke eines Zielszenarios und Anzeigen eines Punktwolkenrahmens in der Punktwolke, wobei das Zielszenario sich auf ein Szenario in einer realen physischen Welt bezieht und die Punktwolke zumindest einen Punktwolkenrahmen umfasst, wobei der Punktwolkenrahmen eine Vielzahl von Punktdatenelementen umfasst, wobei die Punktdaten dreidimensionale Koordinaten und Laserreflexionsintensität umfassen;
Empfangen (S102, S302, S402) von durch einen Benutzer eingegebenen Regionsauswahlinformationen, wobei die Regionsauswahlinformationen durch den Benutzer basierend auf dem angezeigten Punktwolkenrahmen gesendet werden;
Verarbeiten (S103) von Punktdaten in einer Zielregion, die den Regionsauswahlinformationen entspricht, durch Löschen, Bearbeiten oder Ersetzen, um eine verarbeitete Punktwolke zu erhalten, wobei durch die Verarbeitung eine Umgebungsänderung der realen physischen Umgebung simuliert wird; und
Senden (S104, S306, S405) der verarbeiteten Punktwolke an ein Testfahrzeug, wobei die verarbeitete Punktwolke zum Generieren von Positionierungsinformationen verwendet wird.

2. Verfahren nach Anspruch 1, wobei die Verarbeitung (S103) der Punktdaten in der Zielregion, die den Regionsauswahlinformationen entspricht, zum Erhalten der verarbeiteten Punktwolke Folgendes umfasst:
Empfangen (S303) von Segmentierungsalgorithmuskonfigurationsinformationen, die von dem Benutzer für die Punktdaten in der Zielregion gesendet werden, wobei die Segmentierungsalgorithmuskonfigurationsinformationen einen Segmentierungsalgorithmusnamen und einen Algorithmusparameterwert umfassen;
Segmentieren (S304) der Punktdaten in der Zielregion basierend auf einem Segmentierungsalgorithmus, der dem Segmentierungsalgorithmusnamen und dem Algorithmusparameterwert entspricht, um Punktdaten, die einem Zielgegenstand entsprechen, zu segmentieren; und
Ersetzen (S305) der Punktdaten, die dem Zielgegenstand entsprechen, durch voreingestellte Punktdaten für das Ersetzen, um die verarbeitete Punktwolke zu erhalten.

3. Verfahren nach Anspruch 2, wobei die Punktdaten für das Ersetzen durch Folgendes bestimmt werden:
Bestimmen der Punktdaten für das Ersetzen basierend auf den Punktdaten innerhalb eines voreingestellten Bereichs einer Region, in der sich der Zielgegenstand befindet.

4. Verfahren nach einem der Ansprüche 1 bis 3, wobei das Anzeigen (S101, S301) des Punktwolkenrahmens in der Punktwolke Folgendes umfasst:
Transformieren von Punktdaten in dem Punktwolkenrahmen der Punktwolke in ein Weltkoordinatensystem; und
Anzeigen der Punktdaten in Kombination mit einer elektronischen Karte, die dem Zielszenario entspricht, in dem Punktwolkenrahmen in der elektronischen Karte.

5. Verfahren nach einem der Ansprüche 1 bis 4, wobei die Verarbeitung (S103) der Punktdaten in der Zielregion, die den Regionsauswahlinformationen entspricht, zum Erhalten der verarbeiteten Punktwolke Folgendes umfasst:
Erstellen (S403) von Punktdaten eines hinzuzufügenden Gegenstands in einem Radarkoordinatensystem basierend auf von dem Benutzer eingegebenen Erstellinformationen des Gegenstands; und
Ersetzen (S404) der Punktdaten in der Zielregion durch die Punktdaten des hinzuzufügenden Gegenstands, um die verarbeitete Punktwolke zu erhalten.

6. Vorrichtung (500) zum Generieren von Informationen, die eine Vielzahl von Modulen (501, 502, 503, 504) umfasst, die konfiguriert sind, um ein Verfahren nach einem der Ansprüche 1 bis 5 zu implementieren.

7. Elektronische Vorrichtung, die Folgendes umfasst:
zumindest einen Prozessor (601), und
einen Speicher (602), der mit dem zumindest einen Prozessor (601) kommunizierend verbunden ist;
wobei der Speicher Befehle speichert, die durch den zumindest einen Prozessor (601) ausführbar sind und die Befehle, wenn sie durch den zumindest einen Prozessor (601) ausgeführt werden, bewirken, dass der zumindest eine Prozessor (601) ein Verfahren nach einem der Ansprüche 1 bis 5 durchführt.

8. Nichtflüchtiges computerlesbares Speichermedium (602), das Computerbefehle speichert, wobei die Computerbefehle verwendet werden, um zu bewirken, dass ein Computer ein Verfahren nach einem der Ansprüche 1 bis 5 durchführt.

9. Computerprogrammprodukt, das ein Computerprogramm umfasst, wobei das Computerprogramm, wenn es durch einen Prozessor (601) ausgeführt wird, ein Verfahren nach einem der Ansprüche 1 bis 5 implementiert.

## Revendications

1. Procédé pour générer des informations, comprenant les étapes consistant à :
recevoir (S101, 5301, 5401) un nuage de points d'un scénario cible, et afficher une trame de nuage de points dans le nuage de points, dans lequel le scénario cible fait référence à un scénario dans un monde physique réel, et le nuage de points inclut au moins une trame de nuage de points, la trame de nuage de points incluant une pluralité d'éléments de données de points, les données de points incluant des coordonnées tridimensionnelles et une intensité de réflexion laser ;
recevoir (S102, 5302, 5402) des informations de sélection de région entrées par un utilisateur, les informations de sélection de région étant envoyées par l'utilisateur sur la base de la trame de nuage de points affichée ;
traiter (S103) des données de points dans une région cible correspondant aux informations de sélection de région par suppression, modification ou substitution afin d'obtenir un nuage de points traité, un changement environnemental de l'environnement physique réel étant simulé par le traitement ; et
envoyer (S104, 5306, 5405) le nuage de points traité à un véhicule de test, le nuage de points traité étant utilisé pour générer des informations de positionnement.

2. Procédé selon la revendication 1, dans lequel le traitement (S103) des données de points dans la région cible correspondant aux informations de sélection de région pour obtenir le nuage de points traité comprend les étapes consistant à :
recevoir (S303) des informations de configuration d'algorithme de segmentation envoyées par l'utilisateur pour les données de points dans la région cible, les informations de configuration d'algorithme de segmentation comprenant un nom d'algorithme de segmentation et une valeur de paramètre d'algorithme ;
segmenter (S304), sur la base d'un algorithme de segmentation correspondant au nom d'algorithme de segmentation et à la valeur de paramètre d'algorithme, les données de points dans la région cible pour segmenter des données de points correspondant à un objet cible ; et
remplacer (S305) les données de points correspondant à l'objet cible par des données de points préétabliess pour un remplacement afin d'obtenir le nuage de points traité.

3. Procédé selon la revendication 2, dans lequel les données de points pour un remplacement sont déterminées en :
déterminant les données de points pour un remplacement sur la base des données de points à l'intérieur d'une plage prédéfinie d'une région où l'objet cible est situé.

4. Procédé selon l'une quelconque des revendications 1 à 3, dans lequel l'affichage (S101, 5301) de la trame de nuage de points dans le nuage de points comprend les étapes consistant à :
transformer des données de points dans la trame de nuage de points du nuage de points en un système de coordonnées mondial ; et
afficher, en combinaison avec une carte électronique correspondant au scénario cible, les données de points dans la trame de nuage de points dans la carte électronique.

5. Procédé selon l'une quelconque des revendications 1 à 4, dans lequel le traitement (S103) des données de points dans la région cible correspondant aux informations de sélection de région pour obtenir le nuage de points traité comprend les étapes consistant à :
construire (S403), dans un système de coordonnées radar, des données de points d'un objet à ajouter sur la base d'informations de construction de l'objet entré par l'utilisateur ; et
remplacer (S404) les données de points dans la région cible par les données de points de l'objet à ajouter pour obtenir le nuage de points traité.

6. Appareil (500) pour générer des informations, comprenant une pluralité de modules (501, 502, 503, 504) configurés pour mettre en œuvre le procédé selon l'une quelconque des revendications 1 à 5.

7. Dispositif électronique, comprenant :
au moins un processeur (601) ; et
une mémoire (602) connectée en communication avec le au moins un processeur (601) ;
la mémoire stockant des instructions exécutables par le au moins un processeur (601), et les instructions, lorsqu'elles sont exécutées par le au moins un processeur (601), amenant le au moins un processeur (601) à exécuter le procédé selon l'une quelconque des revendications 1 à 5.

8. Support de stockage non transitoire lisible par ordinateur (602) stockant des instructions informatiques, les instructions informatiques étant utilisées pour amener un ordinateur à exécuter le procédé selon l'une quelconque des revendications 1 à 5.

9. Produit de programme informatique comprenant un programme informatique, le programme informatique, lorsqu'il est exécuté par un processeur (601), mettant en œuvre le procédé selon l'une quelconque des revendications 1 à 5.
